# EUROPEAN PATENT SPECIFICATION

(11) **EP 1 779 925 B1**
(45) Date of publication and mention of the grant of the patent: **24.06.2009**
(21) Application number: 06425730.6
(22) Date of filing: 23.10.2006
(51) Int. Cl.: B01J 8/04

(54) **Catalytic reactor for endothermic reaction processes, particularly for light hydrocarbon steam reforming**
Katalytischer Reaktor für endothermische Prozesse, insbesondere für Dampfreformierung von leichten Kohlenwasserstoffen
Réacteur catalytique pour réactions endothermiques, notamment pour le reformage à la vapeur d'hydrocarbures légèrs

(30) Priority: 25.10.2005 IT CE20050010
(43) Date of publication of application: 02.05.2007
(73) Proprietor: Hydro-Gen Amodio s.a.s., 81100 Caserta, CE (IT)
(72) Inventor: Amodio, Filippo, Deceased (IT)

(56) References cited:
- EP-A- 1 408 003
- WO-A-20/04071951
- FR-A- 2 240 179
- US-A- 3 909 299
- US-A1- 2001 009 653
- US-A1- 2004 187 386
- US-B1- 6 793 698

## Description

### TECHNICAL FIELD

The present invention refers to a catalytic reactor for endothermic reaction processes and, in particular, for light hydrocarbon steam reforming.
Specifically, the reactor is suitable for the hydrogen production process by means of steam reforming using water and natural gas or LPG or other light hydrocarbons.

### TECHNICAL BACKGROUND

Steam reforming processes are based on a series of reactions that as a whole results to have endothermic character; moreover, it is forecasted the use of superheated steam as reactant water.
According to different applications, the known steam reforming reactors are of various types, for example for a plant of production of electric energy of power from 20 kW to more than 1.25 MW or for a portable generator of 1- 5 kW or for automotive application. Of course, the steam reforming reactors are also used for the hydrogen rich gases production.

Generally, a steam reforming reactor includes one or more burners for the production of steam that flows inside heat exchange coils; the steam then is mixed with gaseous hydrocarbons and sent to catalytic beds, appropriately heated, where the reforming reactions happens.

The hydrogen coming out is sent to the end users and in, some cases, also to the reactor burner itself.
If the end user is a fuel cell, often the excess hydrogen, not used by the cells, goes back to the reactor burners.

Various geometric configurations of the reactors have been proposed, in order to optimize their flexibility and efficiency.

For example a type presents a number of reactors as the number of in series reactions necessary to perform the whole process. Each of these reactors may have one or more series of parallel, vertical pipes filled with catalysts and linked up with an inlet chamber and with an outlet chamber, which are connected, respectively, to the reactor of the previous reaction stage and to the reactor of the next reaction stage; the structure include an vaporizer/superheated heat exchange coils as well.

Another type of reactor (IT Pat. 1223417) foresees an annular disposition of the catalyst while the burner is situated in the centre. This configuration yields a compact reactor is able to carry out the methanol steam reforming that requires a single reaction stage, as demonstrated through tests carried out by the inventor before the deposit of the patent above mentioned. However, it is unable to carry out the whole light hydrocarbons steam reforming process that, as will be better described below requires at least five different reaction stages that uses as many different catalysts and different thermal levels. In particular, as per tests carried out by the inventor after the deposit of the patent above mentioned, this type of reactor is unable to satisfy at the same time the following demands: to be filled with all the various catalysts necessary to carry out the five reactions in series involved; to have a geometric configuration to allow the insertion of an adequate number of burners, to reached the temperature of about 700 °C inside the reforming catalytic bed; to allow the achievement of the different thermal levels, required by the various catalysts used, in order to: to not damage the catalysts; to carry out the necessary reactions; to get elevated reactants conversion degree and, therefore, of the hydrogen production. Therefore, it needs to foresee the use of a type of reactor that, even though compact, is conceptually different from the one just described so to satisfy at the same time all the reported demands.

### DESCRIPTION OF THE INVENTION

It is known that, using light hydrocarbons as reactants, the rich in hydrogen synthesis gases production process is performed in at least five stages of reaction that require the use of as many catalysts for: the de-sulphurisation of the hydrocarbons (to avoid the poisoning of the reaction catalysts used in the next stages); the pre-reforming and the reforming (to produce gas rich in hydrogen); the high temperature shift and the low temperature shift reactions (to convert the carbon monoxide, with steam, in carbon dioxide and hydrogen); if necessary, the methanation of the residual carbon monoxide.
These in series reactions stages require different temperatures: about 350 °C for the hydrocarbons de-sulphurisation; about 700°C for the pre-reforming and reforming; about 300 °C for the high temperature shift and about 250°C for the low temperature shift.

In addition, it is known the use of steam reforming reactors for feeding fuel cells plants to produce the electric energy; in this type of plant it is necessary that the reactor has as low as possible start up times to rapidly reach the steady state and an operation sufficiently flexible to follow the transitory electric loads.

Specific aim of the invention is to carry out a catalytic reactor able to solve the following problems:
- To have a compact structure, exploitation of more than 75% of the whole volume, making it available to be filled with the various catalysts necessary to carry out the following reactions in series: de-sulphurisation of the hydrocarbons; pre-reforming; reforming; high temperature shift; low temperature shift; if necessary, methanation.
- To have a geometric configuration to allow the insertion of an adequate number of burners to achieve the different thermal levels required by the different used catalysts, in order to: to not damage the catalysts; to carry out the scheduled reactions; to get an elevated conversion of the reactants and, therefore, of hydrogen production.
- To have as low as possible start up times to reach the steady state, i.e. few minutes; particularly in the achievement of the temperature of about 700°C necessary to carry out the steam reforming reaction.
- To have the temperature control of the gases incoming in the shift catalytic bed (fourth chamber).
- To have a reactor with an elevated operational flexibility, particularly in connection with an electric energy production plant, in order to follow the transitory electric loads.
- To have a reactor with a compact geometry suitable to be fitted both in stationary applications and in automotive applications.

This task, as well as these and other aims that will appear clearer in the following, are achieved by means of a catalytic reactor for endothermic processes, particularly for light hydrocarbons steam reforming, constituted of: a first inner chamber filled with the hydrocarbons de-sulphurisation catalyst; a second chamber external to the first and connected with it, filled with the pre-reforming catalyst; a third chamber inner and integrated to the second and connected with it, filled with the reforming catalyst; a fourth chamber external to the third and connected with it, in succession filled with: the high temperature shift catalyst, the low temperature shift catalyst and, if necessary, the methanation catalyst. The fourth chamber have two annular shaped cavities: the first on the top is connected to the third chamber, which in turn is linked with the reactant water to control the temperature of the gases coming from the third chamber; the second annular cavity at the bottom acts as manifold and exit for the reaction products. The inlet of the reactants is in the first chamber. The third chamber is also linked up with one or more burners, each equipped with a couple of nozzles. The shell containing the catalytic reactor, fifth chamber, has the opening for the combustion exhausts gases exit.

### BRIEF DESCRIPTION OF DRAWINGS

Further characteristics and advantages of the invention result evident from the description of a given, but not exclusive, design of the reactor according to the invention, illustrated for indicative purpose and not limitative in the attached sketches, in which:
- the figure 1 illustrates, through a a side view of a longitudinal section, the reactor according to the invention;
- the figure 2 is a side view of a transverse section, of the reactor according to the invention;
- the figure 3 illustrates, through a side view of a longitudinal section, another possible configuration of the reactor according to the invention;
- the figure 4 illustrates, through a side view of a transverse section, the reactor of figure 3 according to the invention and to another possible geometric disposition;

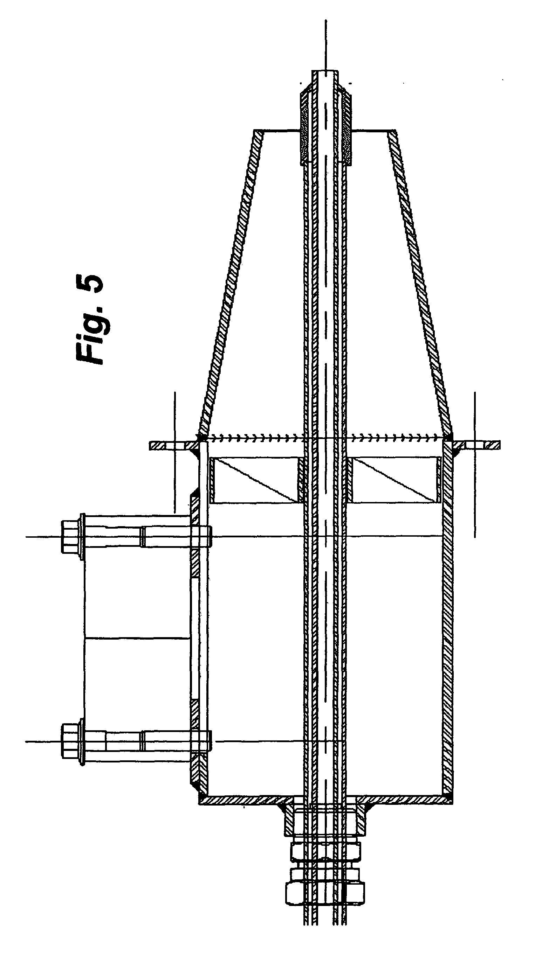

- the figure 5 illustrates, through a side view of a transverse section, a nozzle of the reactor of figure 1 or 3;

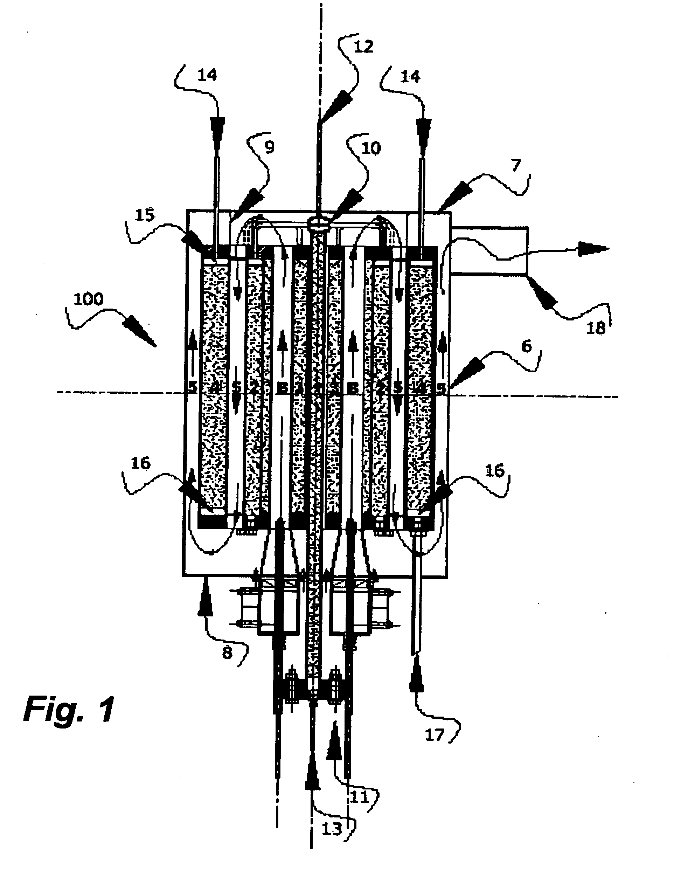

With reference to the figures above mentioned, particularly to the figure 1, the reactor according to the invention, has the reference number 100 and includes a cylindrical external wall 6 closed on the top by a cover 7 and at the bottom by a shell-case 8. Inside the wall 6 and fixed preferably to the cover 7 there is a cylindrical wall 9 concentric to the external wall 6 that defines in this way the forced path of the combustion gases exhausted by the burners B. The cylindrical external wall 6, the cover 7 and the shell-case 8 defines the chamber 5, which is divided in two concentric parts by chambers the details of which are given in the following.

Inside and concentrically to the chamber 5 there is a double chamber made of two integrated chambers 2 and 3, substantially cylindrical, having diameter lower than the inner diameter of the chamber 5. Inside this integrated double chamber there are 3 or more holes B in order to realize a number of cylindrical cavities equal to the number of burners. The geometric-pitch of these cavities may be triangular, square or other.

Concentrically to the integrated double chamber 2 and 3 are present one more holes that defines the cylindrical central cavity within which there is the first cylindrical chamber 1 filled preferably but not exclusively, with the light hydrocarbons desulphurisation catalyst. The first chamber 1 is connected on the top with the static mixer 10 within which the hydrocarbons are mixed with the reaction water, already vaporized, incoming from the pipe 12. In addition, the chamber 1 possesses at the bottom the opening 11, equipped preferably but not exclusively with flanges, that allows the periodic substitution of the catalyst and the inlet of the light hydrocarbons necessary for the reaction, 13.

The reactants from the static mixer 10 are fed, preferably but not exclusively, on the top of the chamber 2 within which the pre-reforming catalyst, preferably but not exclusively, is present. Therefore, the products of the pre-reforming reaction, preferably but not exclusively, enter from the bottom of the chamber 2 in the chamber 3 filled, preferably but not exclusively with the reforming catalyst.

The reforming reaction products, preferably but not exclusively, get out from the top of the chamber 3 to enter, preferably but not exclusively, on the top of the chamber 4 after mixing, in the annular static mixer 15, with further reactant water coming from the feeding pipes 14, to achieve the temperature control and improve the hydrogen yield. The chamber 4 contains in sequence preferably but not exclusively, the high shift temperature catalyst, the low shift temperature catalyst and, if necessary, the methanation catalyst.
The reaction products (hydrogen and carbon dioxide) are collected in an annular cavity 16, placed, preferably but not exclusively, at the bottom of the chamber 4, and sent outside through the duct 17.

As indicated by the arrows in the figure 1, the combustion exhausts gases at first lick up the cylindrical walls B of the chamber 3, then lick in succession the external walls of the chambers 1, 2 and 4, in this way providing the energy for the endothermic reactions.

The combustion exhausts gases escape finally from the radial pipe 18 but before to be exhausted in the atmosphere, they could be used to preheat the reactants before that these enters in the static mixer 10. The way to do this is well known and, therefore, for simplicity it is not described here.

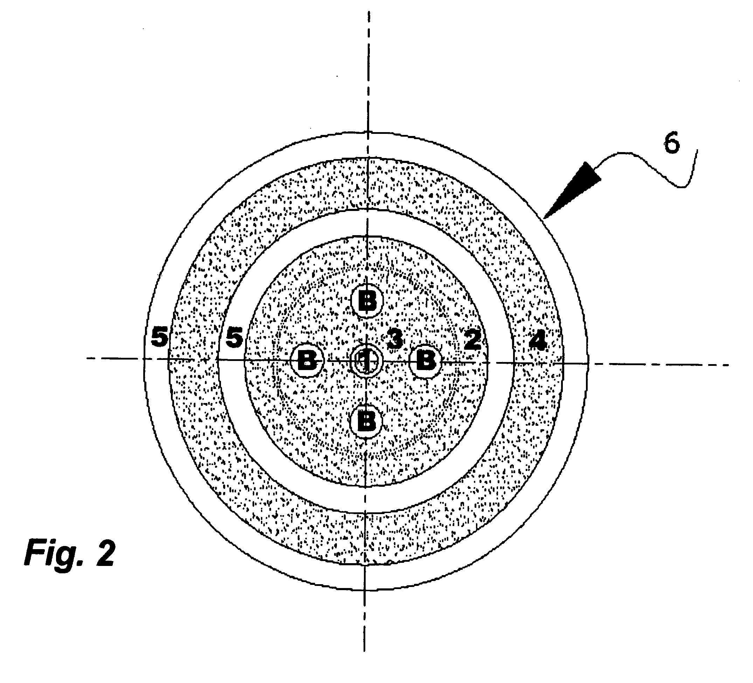

Figure 2 shows is a side view of the reactor transverse section that evidences the disposition of the reaction chambers and of the burners; it is also visible the square geometric-pitch of the burners B.

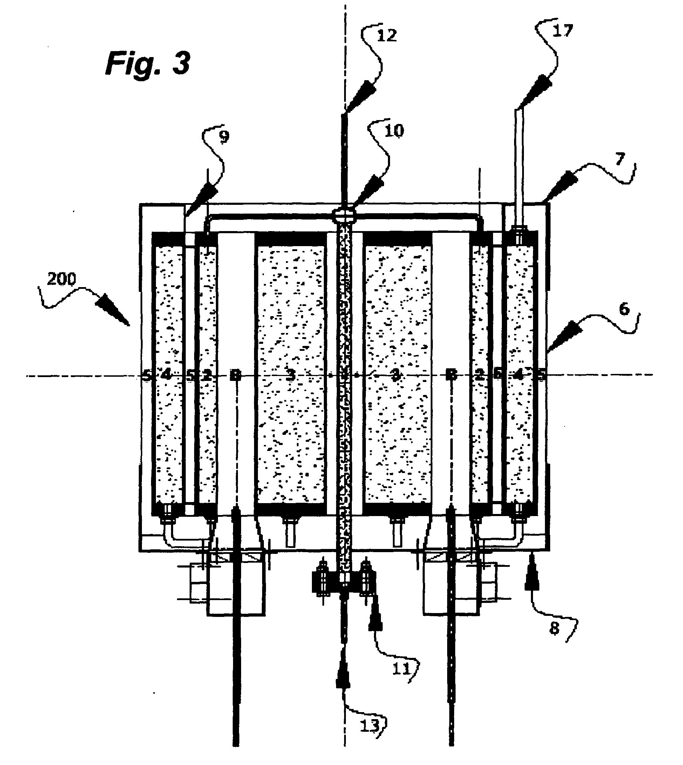

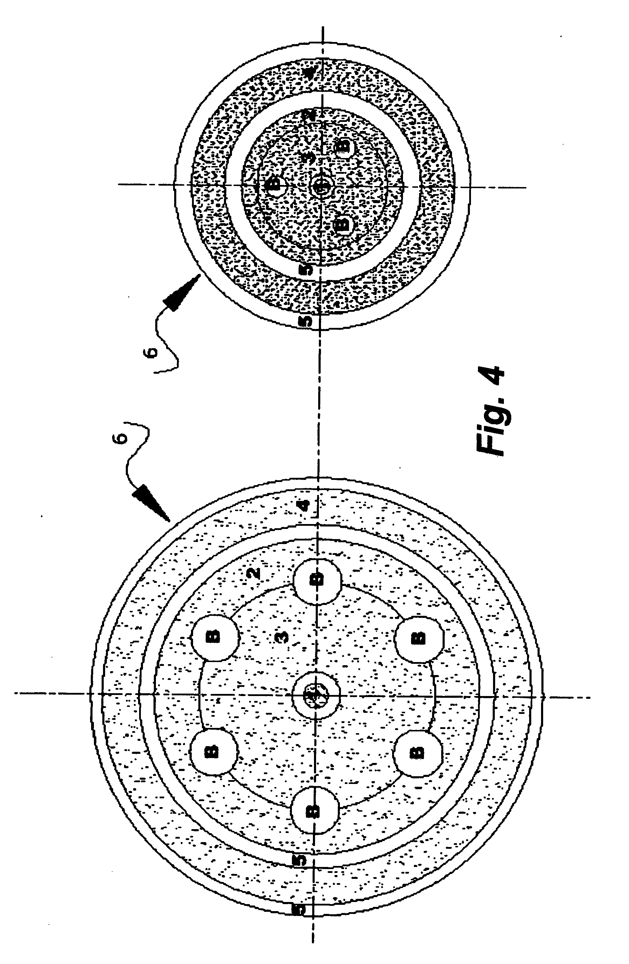

In figure 3 another a steam reforming reactor (reactor 200), with a different burners geometric pitch, is shown; the numbers in the figure, corresponds to those in figure 1, pointing out substantially similar elements. In the figure 4 other possible geometric configurations of the B burners are shown: triangular and hexagonal.

### EXAMPLE

An example of the application of the reactor in the object is for feeding a stack of fuel cells. Practically, it has been ascertained that the reactor, according to the invention, is capable to fully perform this task because joins a compact structure, that employs more than 75% of the whole volume to accommodate the reaction catalysts, with an high thermal efficiency; besides, the reactor has very short start up times for rapid reaching the steady state and is sufficiently flexible to follow the transitory electric loads, characteristic particularly useful for the use in fuel cells plants.

An advantage of the present invention is the reactor compactness that makes possible its use both in stationary and in automotive applications.

Besides the type of reactions and the catalysts, used for the endothermic process, can be other and different from the described design.

The reactor as conceived is susceptible of numerous modifications and variations, all falling within its inventive concept; besides, all the details are replaceable with technically equivalent elements.

Practically, the materials utilised, as well as the dimensions, can be easily changed according to the demands and the status of the technique.

## Claims

1. Catalytic Reactor (100,200) for processes involving endothermic chemical reactions, particularly for light hydrocarbons steam reforming processes, **characterized by** the fact to have: a first cylindrical inner chamber (1) filled with hydrocarbons de-sulphurisation catalyst; a second chamber (2) external to the first (1) and connected with it, filled with the pre-reforming catalyst; a third chamber (3) inner and integrated to the second (2) and connected with it, filled with the reforming catalyst; a fourth chamber (4) external to the third (3) and connected with it, in succession filled with: the high temperature shift catalyst, the low temperature shift catalyst and, if necessary, the methanation catalyst. The fourth chamber (4) have two annular shaped cavities (15,16): the first (15) on the top is connected to the third chamber (3); which in turn is linked with the reactant water (14) to control the temperature of the gases coming from the third chamber (3); the second annular cavity (16) at the bottom acts as manifold and exit (17) for the reaction products. The inlet (13) of the reactants is in the first chamber. The third chamber is also linked up with one or more burners (B), each equipped with a couple of nozzles. The cylindrical shell (6) containing the catalytic reactor, forming the fifth chamber (5), has the opening (11) for the combustion exhausts gases exit.

2. Reactor, according to the claim 1, **characterized by** the fact that said first inner chamber has an upper opening, where a static mixer (10) is located, and a lower opening for the replacement of the catalyst.

3. Reactor, according to the claim 1 or 2, **characterized by** the fact that said second chamber, external to the first chamber and communicating with it, is integrated with a third inner chamber, which has a geometry substantially cylindrical and is coaxial to the first chamber. The diameter of third inner chamber is smaller than that of the inner diameter of the second external chamber.

4. Reactor, according to one or more of the above claims, **characterized by** the fact that said second and third integrated chambers are coaxial to the first inner chamber and there is an annular cavity between the external surfaces of the first chamber and the inner surfaces of the second annular chamber.

5. Reactor, according to one or more of the above claims, **characterized by** the fact that said fourth chamber is coaxial to the second chamber and there is an annular cavity between the inner surfaces of the fourth and the external surfaces of the second chamber.

6. Reactor, according to one or more of the above claims, **characterized by** the fact that said third chamber contains three or more chambers that may have different geometric dispositions connected to one or more burners each one having a couple of nozzles.

7. Reactor, according to one or more of the above claims, **characterized by** the fact that said opening for the discharge of the exhaust combustion gases is located radially in the upper side of the fifth chamber.

8. Reactor, according to one or more of the above claims, **characterized by** the fact that said burner has an annular air duct coaxial to the cited couple of nozzles, which in turn have annular ducts and each axis coincident with those of the chambers derived in the third chamber.

9. Reactor, according to one or more of the above claims, **characterized by** the fact that said couples of nozzles have two coaxial ducts, an inner duct and an outer duct, both suitable for gaseous fuels feeding.

10. Reactor, according to one or more of the above claims, **characterized by** the fact that said fourth outer chamber presents on the top an annular cavity to collect and mix statically the reaction products and the reactants.

11. A method to control the temperature of the reformed gases incoming in the shift catalyst filled in the fourth chamber of a reactor according to the preceding claims, **characterized by** the fact that in the upper annular cavity the static mixing of the cold reactant water with the hot reformed gases is performed.

## Patentansprüche

1. Katalytischer Reaktor für endotherme Reaktionsprozesse, vor allem das Dampfreformieren der leichten Kohlenwasserstoffe. Das Hauptmerkmal der Erfindung ist, dass der Reaktor folgendes aufweist: eine erste zylindrische Kammer, wo sich der Katalysator für die Entschwefelung der Kohlenwasserstoffe befindet; eine zweite Kammer, gelegen außerhalb der ersten Kammer und mit derselben verbunden, wo der Katalysator für das Pre-Forming unterbracht ist; eine dritte Kammer, zusammenhängend und verbunden mit der zweiten Kammer, wo der Katalysator für das Reforming Platz findet; eine vierte Kammer außerhalb der dritten Kammer und mit derselben verbunden, wo sich jeweils die Katalysatoren für Hochtemperatur-Shift, Niedertemperatur-Shift und gegebenenfalls für Methanierung in Folge befinden. Die vierte Kammer weist zwei ringförmige Bestandteile auf: Ein Oberer, der mit der dritten Kammer sowie mit dem Reagenzwasser verbunden ist und zur Kontrolle der Temperatur der Reformiergase dient, die aus der dritten Kammer austreten; der Untere dient zum Speichern und Ausgeben der Reaktionserzeugnisse. In der ersten Kammer ist der Einlass der Reagenzien enthalten. Die dritte Kammer ist außerdem mit einem oder mehreren Brennern operativ verbunden, die jeweils ein Düsenpaar enthalten. Der Behälter des katalytischen Reaktors, sprich fünfte Kammer, ist mit einem Ausgang für Verbrennungsabgase versehen.

2. Reaktor nach Anspruch 1 **dadurch gekennzeichnet, dass** die erste Innenkammer oben mit einer Öffnung endet, wo eben ein statischer Mixer positioniert ist; der untere Abschluss kann darüber hinaus geöffnet werden, um den Katalysator auswechseln zu können.

3. Reaktor nach Ansprüchen 1 oder 2 **dadurch gekennzeichnet, dass** die zweite Kammer, gelegen außerhalb der ersten Kammer und mit derselben verbunden, mit einer dritten Kammer zusammenhängt, die grundsätzlich zylindrische Form hat und koaxial der genannten ersten Kammer eingebaut wird, wobei der Durchmesser der dritten Innenkammer kleiner ist, als das Innendurchmesser der genannten zweiten Außenkammer.

4. Reaktor nach einem oder mehreren der vorigen Ansprüche **dadurch gekennzeichnet, dass** die zusammenhängenden Kammern 2 und 3 koaxial mit der ersten Innenkammer sind, wobei ein Zwischenraum zwischen der Außenwand des genannten ringförmigen Höhlraums und den Außenwänden der genannten zweiten Kammer besteht.

5. Reaktor nach einem oder mehreren der vorigen Ansprüche **dadurch gekennzeichnet, dass** die genannte vierte Kammer koaxial mit der genannten zweiten Kammer ist, wobei ein Zwischenraum zwischen der Innenwand des genannten ringförmigen Höhlraums und den Außenwänden der genannten zweiten Kammer besteht.

6. Reaktor nach einem oder mehreren der vorigen Ansprüche **dadurch gekennzeichnet, dass** die genannte dritte Kammer drei order mehr Kammern mit unterschiedTiclien Anordnung aufweist, die mit einem oder mehr Brennern verbunden sind, die jeweils mit einem Düsenpaar versehen sind.

7. Reaktor nach einem oder mehreren der vorigen Ansprüche **dadurch gekennzeichnet, dass** der genannte Auslass für Verbrennungsabgase radial ist und oberhalb der genannten fünften Kammer eingebaut ist.

8. Reaktor nach einem oder mehreren der vorigen Ansprüche **dadurch gekennzeichnet, dass** der Brenner ein zu dem Düsenpaar koaxial ausgerichtetes zylindrisches Rohr für die Luft enthält, wobei die Achsen der ringförmigen Düsen jeweils mit den Achsen der Kammer übereinstimmen, die in der genannten dritten Kammer unterbracht sind.

9. Reaktor nach einem oder mehreren der vorigen Ansprüche **dadurch gekennzeichnet, dass** die genannten Düsenpaare mit einem Innenrohr und einem koaxial angeordneten Außenrohr versehen sind, wobei beide Röhre Gasbrennstoffe zuführen.

10. Reaktor ist nach einem oder mehr der vorigen Ansprüche **dadurch gekennzeichnet, dass** die genannte vierte Außenkammer einen ringförmigen oberen Höhlraum aufweist, wo die Reagenzerzeugnisse und die Reagenzien gesammelt und gemischt werden.

11. Methode zur Kontrolle der Temperatur der Reformiergase, die in den Shift-Katalysator eingelassen werden, der in der vierten Kammer unterbracht ist. Die genannte Methode ist eben **dadurch gekennzeichnet, dass** die statische Mischung von kalten Reagenzwasser und warmen Reformiergasen in dem genannten oberen Höhlraum stattfindet.

## Revendications

1. Réacteur catalytique pour les procédés de réaction endothermiques, en particulier de steam reforming, des hydrocarbures légers, avec **caractérisé par**: une première chambre intérieure qui loge le catalyseur pour le désoufrage des hydrocarbures ; une seconde chambre extérieure à la première et communicante avec elle, qui loge le catalyseur pour le pre-reforming; une troisième chambre intérieure et intégrée à la seconde et communicante avec elle qui loge le catalyseur pour le pre- reforming; une quatrième chambre extérieure à la troisième et communicante avec elle, qui loge les catalyseurs pour: le shift, à haute température, le shift à basse température et éventuellement pour la méthanisation. La quatrième présente deux éléments creux annulaires: un en haut connexe à la troisième chambre, qui a une connexion avec l'eau réactive pour contrôler la température des gaz reformés qui proviennent de la troisième chambre; l'autre en bas pour recueillir et laisser sortir les produits de réaction. La première chambre présente l'entrée pour les réactifs. La trosième chambre est activement connectée à un ou plus brûleurs aussi; chacun comprend une couple de tuyères. L'enveloppe de compressibilité du réacteur catalytique, qui forme la cinquième chambre, est prévue d'une ouverture de sortie des fumées de combustion.

2. Réacteur, selon la revendication 1, qui présente une ouverture supérieure dans la dite première chambre intérieure, ou se trouve un mélangeur statique, et une fermeture inférieure qui se ouvre pour la substitution du catalyseur.

3. Réacteur, selon la revendication 1 ou 2, dans la quelle la dite seconde chambre, qui est extérieure à la première et qui communique avec elle, est integrée à la troisième chembre intérieure, qui présente une configuration substantiallement cylindrique et coaxiale à la dite première chambre, le diamètre de la dite troisième chambre intérieure, étant inférieur au diamètre intérieur de la dite seconde chambre extérieure.

4. Réacteur, selon l'une ou plusieurs revendications précédentes, **caractérisé en ce que** la dite seconde et la dite troisième chambre integrée sont coaxiales à la dite première chambre intérieure, étant prévu un creux entre les surfaces extérieures du dit élement creux annulaire et les surfaces intérieures de la dite seconde chambre annulaire.

5. Réacteur, selon l'une ou plusieurs revendications précédentes, **caractérisé en ce que** la dite quatrième chambre est coaxiale à la dite seconde chambre, étant prevu un creux entre les surfaces intérieures du dit élement creux annulaire et les surfaces extérieures de la dite seconde chambre annulaire

6. Réacteur, selon l'une ou plusieurs revendications précédentes, **caractérisé en ce que** la dite troisième chambre présente dans la partie intérieure trois ou plusieurs chambres avec différentes dispositions géométriques est activement connectées à un ou plus brûleurs aussi, chacun comprend une couple de tuyères.

7. Réacteur, selon une ou plus revendications précédentes, **caractérisé en ce que** la dite ouverture de sortie des fumées de combustion est aménagée en étoile et dans la partie supérieure à la dite cinquième chambre.

8. Réacteur, selon une ou plusieurs revendications précédentes, **caractérisé en ce que** le dit brûleur comprend un conduit annulaire, pour l'air, coaxiale à la dite couple de tuyères, dits tuyères à conduit annulaire, ayant leur axe chacun correspondant avec les axes des chambres préséntes dans la dite troisième chambre.

9. Réacteur, selon une ou plusieurs revendications précédentes, **caractérisé en ce que**, les dites copules de tuyères présentent un premier conduit intérieur et un seconde conduit coaxial, extérieur au premier conduit intérieur tous les deux aptes à alimenter les combustibles gazeux.

10. Réacteur, selon une ou plusieurs revendications précédentes, **caractérisé en ce que**, la quatrième chambre extérieure est **caractérisée par** un creux annulaire dans la partie supérieure de recueil mélange statique es produits de réaction et réactifs.

11. Une méthode, selon la revendication 10, de contrôle de la température des gaz reformés qui entrent dans le catalyseur de shift qui se trouve dans la quatrième chambre, **caractérisé en ce que** le creux annulaire dans la partie supérieure est de mélange statique entre l'eau réactive froide et gaz refomés chauds.
